# EUROPÄISCHE PATENTANMELDUNG

(11) **EP 1 139 076 A2**
(43) Veröffentlichungstag der Anmeldung: **04.10.2001**
(21) Anmeldenummer: 00125644.5
(22) Anmeldetag: 23.11.2000
(51) Int. Cl.: G01F 25/00

(54) **Fehlererkennung eines Treibstoff-Füllstandsensors**

(30) Priorität: 30.03.2000 DE 10015919
(71) Anmelder: ROBERT BOSCH GMBH, 70442 Stuttgart (DE)
(72) Erfinder: Pfaeffle, Andreas, 71543 Wuestenrot (DE); Schernewski, Ralf, 70469 Stuttgart (DE)

(57) **Zusammenfassung**

Es werden ein Verfahren und eine Vorrichtung zur Steuerung einer Brennkraftmaschine, mit einem Vorratsbehälter für Flüssigkeiten, insbesondere für Kraftstoff, beschrieben. Wo-Eine erste Größe, die den Bestand an Flüssigkeit im Vorratsbehälter charakterisiert, wird gemessen. Eine zweite Größe, die den Bestand an Flüssigkeit im Vorratsbehälter charakterisiert, wird berechnet. Ausgehend von dem Vergleich zwischen der ersten Größe und der zweiten Größe wird ein Fehler und/oder ein Befüllen des Vorratsbehälters erkannt.

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine ist aus der DE 196 54 728 bekannt. Dort wird ein Verfahren zur Ermittlung der Kraftstoffrestmenge in einem Kraftstofftank einer Brennkraftmaschine beschrieben. Mittels eines Fühlstandsmessers wird der Inhalt des Tanks ermittelt. Ferner wird der aktuelle Verbrauch des Fahrzeuges an Kraftstoff bestimmt. Ausgehend von einem Wert, der gemessen wurde und einem berechneten Wert für den Verbrauch, wird der jeweils aktuelle Füllstand des Tanks berechnet. Dadurch können starke Mengenschwankungen bei der Messung des Füllstandes kompensiert werden.

Ein Fehler insbesondere eine Leckage im Kraftstoffzumeßsystem kann mit dieser Einrichtung nicht erkannt werden. Desweiteren kann ein Nachtanken bei laufender Brennkraftmaschine nicht erkannt werden.

### Vorteile der Erfindung

Dadurch, dass eine erste Größe, die den Bestand an Flüssigkeit im Vorratsbehälter charakterisiert, gemessen wird und dass eine zweite Größe, die ebenfalls den Bestand an Flüssigkeit im Vorratsbehälter charakterisiert, berechnet wird, kann durch Vergleich der ersten und der zweiten Größe ein Fehler, insbesondere eine Leckage und/oder ein Befüllen des Vorratsbehälters sicher erkannt werden.

Besonders vorteilhaft ist es, wenn die zweite Größe ausgehend von in einem Steuergerät vorliegenden Betriebskenngrößen der Brennkraftmaschine berechnet wird. Als besonders geeignet hat sich die pro Zeiteinheit einzuspritzende Kraftstoffmenge als Betriebskenngröße erwiesen.

### Zeichnung

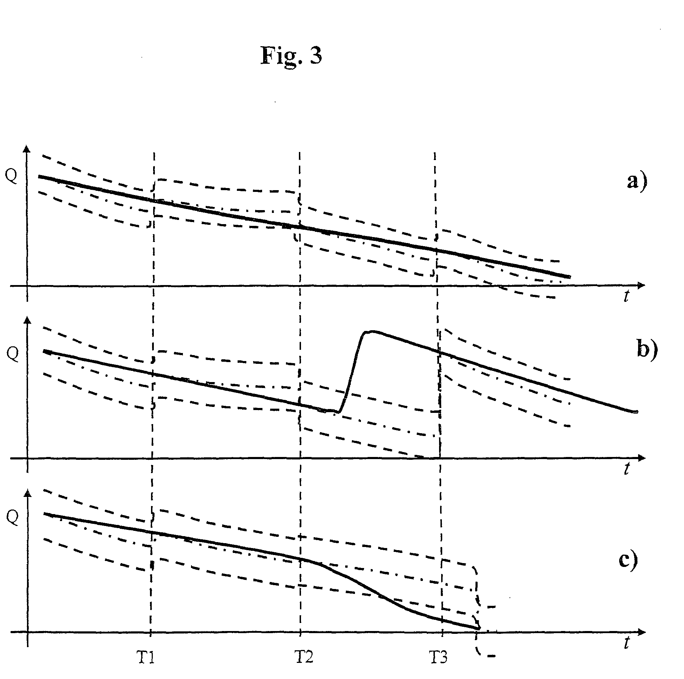

Die Erfindung wird nachstehend anhand der in der Zeichnung dargestellten Ausführungsformen erläutert. Es zeigen Figur1 ein Blockdiagramm, Figur 2 ein Flussdiagramm der erfindungsgemäßen Vorgehensweise und Figur 3 der zeitliche Verlauf verschiedener Größen.

### Beschreibung der Ausführungsbeispiele

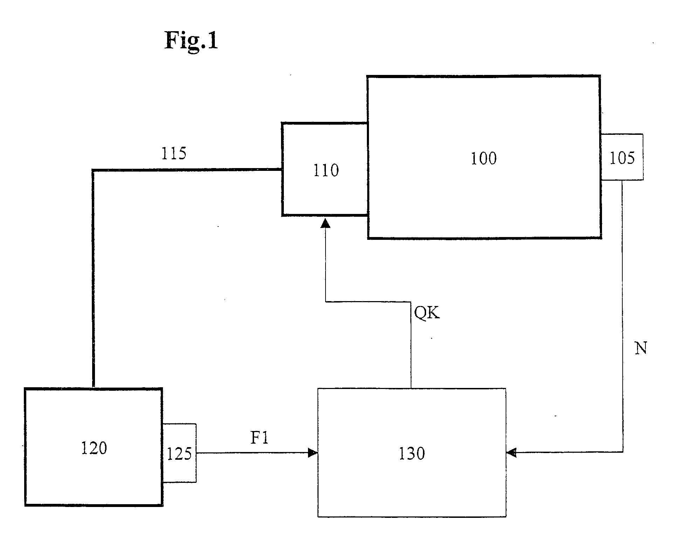

In Figur 1 sind die wesentlichen Elemente der erfindungsgemäßen Vorrichtung als Blockdiagramm dargestellt.

Die erfindungsgemäße Vorgehensweise wird im folgenden am Beispiel eines Kraftstofftanks 120 einer Brennkraftmaschine 100, der im folgenden als Vorratsbehälter bezeichnet wird, beschrieben. Die Vorgehensweise ist aber nicht auf diese Anwendung beschränkt, sie kann auch bei anderen Behältern verwendet werden.

Der Brennkraftmaschine 100 wird von einer Kraftstoffzumesseinheit 110 Kraftstoff zugemessen. Der Kraftstoff gelangt von dem Tank 120 über eine Leitung 115 zu der Kraftstoffzumesseinheit 110. An der Brennkraftmaschine 100 sind Sensoren 105, die den Betriebszustand der Brennkraftmaschine erfassen angeordnet. Eine wesentliche Größe ist dabei die Drehzahl N der Brennkraftmaschine. Im Tank ist ein Sensor 125 angeordnet, der ein Signal liefert, das den Füllstand im Tank 120 charakterisiert. Die verschiedenen Signale werden einer Steuereinheit 130 zugeführt, die die Kraftstoffzumesseinheit mit einem Ansteuersignal QK beaufschlagt, das die einzuspritzende Kraftstoffmenge charakterisiert.

Bei der erfindungsgemäßen Vorgehensweise wird ausgehend von Größen, die in einer elektronischen Steuerung der Brennkraftmaschine vorliegen, der Kraftstoffverbrauch pro Zeiteinheit ermittelt. Hierzu wird vorzugsweise die eingespritzte Kraftstoffmenge oder ein Signal, wie beispielsweise die Einspritzdauer, die die eingespritzte Kraftstoffmenge charakterisiert, verwendet. Eine solche Größe ist beispielsweise das Signal QK, mit dem die Kraftstoffzumesseinheit 110 beaufschlagt wird.

Mittels dieser Information bezüglich der eingespritzten Kraftstoffmenge pro Zeiteinheit wird ausgehend von dem zuletzt gemessenen Füllstand und der über eine bestimmte Zeit eingespritzte Kraftstoffmenge ein Sollfüllstand bestimmt. Der Füllstand wird dabei vorzugsweise mit dem Sensor 125 erfaßt. Der gemessene Füllstand, der im folgenden auch als erste Größe bezeichnet wird, wird mit dem berechneten Füllstand der im folgenden auch als zweite Größe bezeichnet wird, verglichen. Weichen diese beiden Größen um mehr als eine Toleranzgrenze voneinander ab, kann entweder eine Leckage oder ein Nachtanken im laufenden Betrieb erkannt werden.

Ein solches Nachtanken im laufenden Betrieb muß insbesondere bei Systemen mit Abgasnachbehandlung sicher erkannt werden. Insbesondere ist dies wichtig, wenn das Abgasnachbehandlungsystem Additive, die dem Kraftstoff zugesetzt werden, verwendet.

Eine Leckage wird insbesondere dann erkannt, wenn der gemessene Füllstand deutlich kleiner ist als der berechnete. Ein Nachtanken wird erkannt, wenn der gemessene Füllstand deutlich größer ist als der berechnete. Anstelle des Füllstands können auch andere Größen, die den Bestand an Flüssigkeit im Vorratsbehälter charakterisieren, verwendet werden. Insbesondere können Größen verwendet werden, die den Volumeninhalt des Vorratsbehälters bzw. des verbleibenden Kraftstoffs charakterisieren.

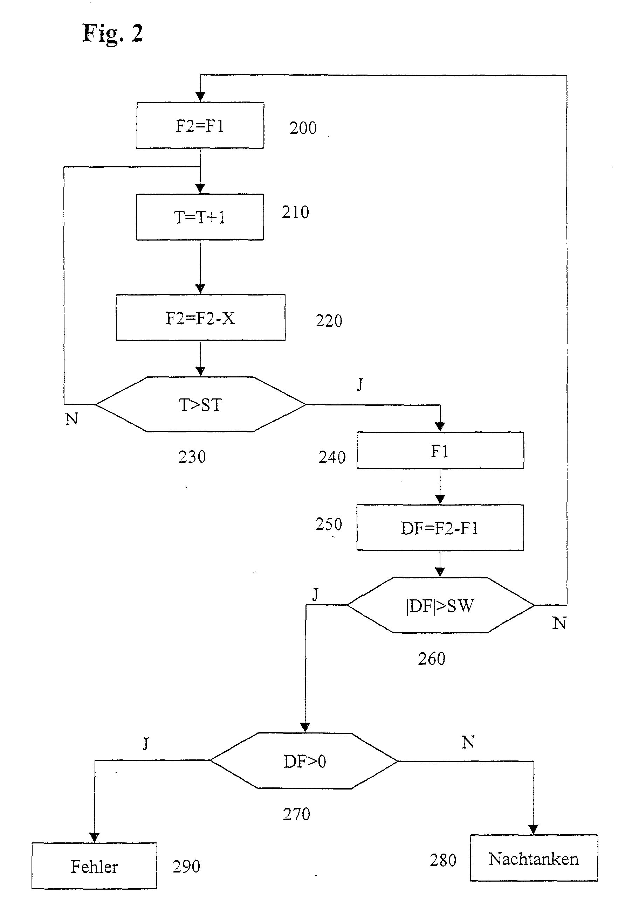

In Figur 2 ist eine Ausführungsform der erfindungsgemäßen Vorgehensweise als Flussdiagramm dargestellt. Diese Auswertung erfolgt vorzugsweise in der Steuereinheit 130.

In einem ersten Schritt 200 wird die zweite Größe F2 mit der zuletzt gemessenen ersten Größe F1 initialisiert. Anschließend wird in Schritt 210 ein Zeitzähler um 1 erhöht. Im Schritt 220 wird die zweite Größe F2 ausgehend von dem bisherigen Wert der zweiten Größe F2 und einer Größe X berechnet. Die Größe X ergibt sich aus der eingespritzten Kraftstoffmenge, die im Zeitintervall zwischen der letzten Berechnung eingespritzt wurde.

Die anschließende Abfrage 230 überprüft, ob eine Zeitschwelle ST vom Zeitzähler T überschritten wurde. Ist dies nicht der Fall, so wird im Schritt 210 der Zeitzähler erneut erhöht und in Schritt 220 erfolgt eine erneute Berechnung der zweiten Größe. Ist der Zeitzähler T größer als der Schwellenwert ST, wird in Schritt 240 die erste Größe F1 gemessen.

Im anschließenden Schritt 250 wird die Differenz DF zwischen der zweiten Größe F2, die berechnet wurde, und der ersten Größe Fl, die gemessen wurde, bestimmt. Die Abfrage 260 bestimmt, ob der Betrag dieser Differenz DF größer als ein Schwellenwert SW ist. D.h. die Abfrage 260 überprüft, ob die Differenz der beiden Größer als eine erlaubte Toleranzgrenze ist. Ist dies nicht der Fall, d.h. die erste und die zweite Größe weichen nur unwesentlich voneinander ab, so setzt das Programm mit Schritt 200 fort.

Erkennt die Abfrage 260, dass die beiden Größen wesentlich voneinander abweichen, so überprüft eine Abfrage 270, ob die Differenz DF größer 0 ist. Ist die Differenz DF größer 0, d.h. die gemessene Größe ist wesentlich größer als die berechnete Größe, so liegt ein Fehler vor. Dieser wird in Schritt 290 erkannt. Als Fehler wird insbesondere eine Leckage, d.h. eine Undichtigkeit im System erkannt. Ist die Differenz DF zwischen den beiden Werten kleiner 0, d.h. der berechnete Wert F2 ist deutlich kleiner als der gemessene Wert F1, so wird in Schritt 280 ein Nachtanken im laufenden Betrieb erkannt.

Erfindungsgemäß werden abhängig von dem Vergleich der ersten und zweiten Größe unterschiedliche Maßnahmen zur Steuerung der Brennkraftmaschine eingeleitet. Ist der gemessene Füllstand kleiner als der berechnete Füllstand wird eine Leckage erkannt und ein entsprechender Notfahrbetrieb eingeleitet. Ist der gemessene Füllstand größer als der berechnete Füllstand wird ein Befüllen des Vorratsbehälters erkannt. Dies wird bei der Steuerung der Brennkraftmaschine und/oder zugeordneter System, wie beispielsweise eines Abgasnachbehandlungssystems berücksichtigt. Solche Abgasnachbehandlungssysteme beinhalten beispielsweise Katalysatoren und/oder Partikelfilter.

In Figur 2 ist der zeitliche Verlauf verschiedener Größen dargestellt. In Figur 2a ist der Verlauf im Normalbetrieb, in Figur 2b beim Nachtanken und in Figur 2c bei einer Leckage aufgetragen. Mit einer durchgezogenen Linie ist der gemessene Füllstand, der der ersten Größe F1 entspricht, eingezeichnet. Mit einer strichpunktierten ist die berechnete zweite Größe F2 und mit einer gestrichelten das Toleranzband eingezeichnet.

Jeweils zu den Zeitpunkten T1, T2, T3 wird die Berechnung bzw. die Simulation der zweiten Größe initialisiert. Das Toleranzband, das gestrichelt eingezeichnet ist, gibt den Abstand an, den der gemessene Füllstand maximal erreichen darf, bevor ein Fehler erkannt wird. In Figur 2b ist der Fall dargestellt, bei dem nachgetankt wird. Dies erfolgt zwischen dem Zeitpunkt T2 und T3. Dies hat zur Folge, dass kurz nach dem Zeitpunkt der gemessene Füllstand stark ansteigt, die Werte größer als das Toleranzband annimmt. Entsprechendes gilt in Figur 2c, bei dem eine Leckage dargestellt ist. Dies bedeutet, dass der gemessene Füllstand unter das Toleranzband abfällt.

Die Zeitpunkte T1, T2 und T3, bei denen die Berechnung neu gestartet wird, können in festen zeitlichen Abständen oder Winkelabständen vorgegeben werden. Desweiteren ist es möglich, dass diese Zeitpunkte abhängig vom Betriebszustand der Brennkraftmaschine bzw. des Fahrzeugs vorgegeben werden. Insbesondere ist vorteilhaft, dass der Füllstand nur dann gemessen wird, wenn eine genaue Messung möglich ist, bzw. das eine Messung ausgeblendet wird, wenn eine genaue Messung nicht möglich ist. Dies ist insbesondere dann der Fall, wenn das Fahrzeug stark beschleunigt, oder der gemessene Füllstand stark schwankt.

## Patentansprüche

1. Verfahren zur Steuerung einer Brennkraftmaschine, mit einem Vorratsbehälter für Flüssigkeiten, insbesondere für Kraftstoff, wobei eine erste Größe, die den Bestand an Flüssigkeit im Vorratsbehälter charakterisiert, gemessen wird, und eine zweite Größe, die den Bestand an Flüssigkeit im Vorratsbehälter charakterisiert, berechnet wird, **dadurch gekennzeichnet, dass** ausgehend von dem Vergleich zwischen der ersten Größe und der zweiten Größe ein Fehler und/oder ein Befüllen des Vorratsbehälters erkannt wird.

2. Verfahren nach Anspruch 1, **dadurch gekennzeichnet, daß** eine Leckage als Fehler erkannt wird.

3. Verfahren nach Anspruch 1 oder 2, **dadurch gekennzeichnet, daß** die zweite Größe ausgehend von Betriebskenngrößen der Brennkraftmaschine berechnet wird.

4. Verfahren nach Anspruch 3, **dadurch gekennzeichnet, daß** als Betriebskenngrößen wenigstens eine Größe verwendet wird, die die pro Zeiteinheit einzuspritzende Kraftstoffmenge charakterisiert.

5. Verfahren nach einem der vorherigen Ansprüche, **dadurch gekennzeichnet, daß** abhängig von dem Vergleich der ersten und zweiten Größe unterschiedliche Maßnahmen zur Steuerung der Brennkraftmaschine eingeleitet werden.

6. Verfahren nach einem der vorherigen Ansprüche, **dadurch gekennzeichnet, daß** ein Fehler, insbesondere eine Leckage, erkannt wird, wenn die erste Größe kleiner als die zweite Größe ist.

7. Verfahren nach einem der vorherigen Ansprüche, **dadurch gekennzeichnet, daß** ein Nachtanken erkannt wird, wenn die erste Größe größer als die zweite Größe ist.

8. Vorichtung zur Steuerung einer Brennkraftmaschine, mit einem Vorratsbehälter für Flüssigkeiten, insbesondere für Kraftstoff, mit ersten Mitteln, die eine erste Größe, die den Bestand an Flüssigkeit im Vorratsbehälter charakterisiert, messen, und mit zweiten Mitteln, die eine zweite Größe, die den Bestand an Flüssigkeit im Vorratsbehälter charakterisiert, berechnen, **dadurch gekennzeichnet, dass** mittel vorgesehen sind, die ausgehend von dem Vergleich zwischen der ersten Größe und der zweiten Größe ein Fehler und/oder ein Befüllen des Vorratsbehälters erkennen.
